# FASCICULE DE BREVET EUROPEEN

(11) **EP 2 164 722 B1**
(45) Date de publication et mention de la délivrance du brevet: **17.11.2010**
(21) Numéro de dépôt: 08826214.2
(22) Date de dépôt: 13.06.2008
(51) Int. Cl.: B60P 1/36, B64D 9/00

(54) **DISPOSITIF POUR DÉPLACER DES OBJETS, DESTINÉ NOTAMMENT À DES BAGAGES DANS UNE SOUTE D'UN AÉRONEF**
VORRICHTUNG ZUR BEWEGUNG VON OBJEKTEN, INSBESONDERE FÜR GEPÄCK IN EINER FLUGZEUGKABINE
DEVICE FOR MOVING OBJECTS, INTENDED, IN PARTICULAR, FOR LUGGAGE IN AN AIRCRAFT HOLD

(30) Priorité: 15.06.2007 FR 0704291
(43) Date de publication de la demande: 24.03.2010
(73) Titulaire: AIRBUS OPERATIONS, 31060 Toulouse (FR)
(72) Inventeur: GUERING, Bernard, F-31850 Montrabe (FR); SAINT-MARC, Laurent, F-31100 Toulouse (FR)
(74) Mandataire: Hartmann, Jean-Luc
(86) Numéro de dépôt international: PCT/FR2008/000821
(87) Numéro de publication internationale: WO 2009/007548

(56) Documents cités:
- EP-A- 0 081 695
- WO-A-98/38087
- FR-A- 2 029 896

## Description

La présente invention concerne un dispositif pour déplacer des objets, destiné notamment à des bagages dans une soute d'un aéronef.

Dans un aéronef destiné au transport de passagers, les passagers emportent une partie de leurs bagages avec eux dans la cabine de l'aéronef tandis que les bagages les plus volumineux et les plus lourds voyagent en soute. Ces derniers bagages sont transportés jusqu'à l'aéronef à l'aide de convoyeurs ou sur des chariots tractés. Il existe des convoyeurs permettant de transporter les bagages jusqu'à la porte de la soute de l'aéronef. Le rangement à l'intérieur de la soute se fait le plus souvent manuellement. Un opérateur saisit le bagage arrivant dans la soute et va le loger à l'intérieur de celle-ci. Ces opérations pour placer les bagages dans la soute sont pénibles. La soute est un espace relativement exigu dans lequel il n'est pas possible la plupart du temps de tenir debout. En outre, certains bagages peuvent être lourds. Le plus difficile est d'aller placer les premiers bagages au fond de la soute lors du chargement des bagages ou bien, lors du déchargement des bagages, d'aller chercher les bagages se trouvant au fond de la soute pour les sortir.

Toutes ces difficultés à disposer les bagages dans la soute rendent les temps de chargement et de déchargement des bagages des passagers relativement longs. Les passagers, après leur descente de l'aéronef, doivent alors attendre leurs bagages dans l'aérogare. De ce fait, de nombreux passagers préfèrent emporter tous leurs bagages en cabine, même certains relativement volumineux, plutôt que de les faire voyager en soute.

Pour inciter les passagers à faire voyager leurs bagages en soute, et libérer de l'espace en cabine, permettant ainsi d'augmenter le confort des passagers durant leur voyage et à l'embarquement/débarquement, il convient de limiter le temps d'attente pour la récupération des bagages ayant voyagé en soute.

Le document WO-98/38087 décrit un dispositif pour charger des bagages dans une soute à fret d'un aéronef. Ce dispositif comporte un tapis présentant un brin supérieur et un brin inférieur. À chaque extrémité de ce tapis, est associé un rouleau, les deux rouleaux se trouvant à une même extrémité de la soute d'aéronef. Le tapis s'étend en permanence tout le long de la soute avec un brin supérieur et un brin inférieur. Une paroi mobile est montée sur le brin supérieur du tapis. Pour déplacer la paroi mobile, et les éléments se trouvant sur le tapis, un rouleau est enroulé tandis que l'autre est déroulé, ou inversement.

Le document EP-0 081 695 concerne quant à lui un véhicule tel un camion et plus particulièrement une remorque d'un semi-remorque. Le dispositif décrit comporte un tapis associé à une paroi mobile. La paroi mobile est d'un côté actionnée par des câbles venant s'enrouler sur des rouleaux se trouvant à une extrémité de la remorque et d'un autre côté elle est actionnée par un tapis venant s'enrouler à une autre extrémité de la remorque en passant sur un rouleau de renvoi.

Le document FR-2 029 896 révèle quant à lui une remorque munie d'un convoyeur de déchargement entièrement escamotable lorsqu'il s'agit de dégager totalement le plateau de la remorque ou d'utiliser cette dernière comme benne basculante.

La présente invention a alors pour but de fournir un dispositif permettant de faciliter la tâche des opérateurs chargés de placer des bagages dans une soute d'aéronef et de décharger cette soute.

Un autre but de l'invention est de fournir des moyens permettant de décharger plus rapidement la soute d'un aéronef pour limiter, voire supprimer, le temps d'attente des bagages lors de l'arrivée des voyageurs dans l'aérogare à leur arrivée.

Avantageusement, le système selon l'invention est un système modulaire pouvant s'adapter à une soute recevant à la fois des conteneurs et des bagages. De préférence, ce dispositif pourra permettre d'adapter l'espace prévu pour les bagages dans la soute, en fonction notamment du nombre de conteneurs à transporter.

À cet effet, la présente invention propose un dispositif pour déplacer des objets, notamment des bagages, dans une soute d'aéronef, comportant une paroi mobile et au moins un tapis.

Selon la présente invention, une extrémité du tapis est raccordée à un rouleau sur lequel le tapis est destiné à venir s'enrouler ; l'autre extrémité du tapis est fixée sur la paroi mobile ; un brin inférieur du tapis s'étend à partir de la paroi mobile jusqu'à un seuil, et un brin supérieur du tapis s'étend du seuil jusqu'à la paroi mobile.

De cette manière, pour charger une soute d'aéronef, un utilisateur peut déposer des objets sur le brin supérieur du tapis contre la paroi mobile, puis déplacer ladite paroi mobile entraînant alors un déroulement du tapis. Les objets sont alors entraînés avec la paroi mobile et un espace libre apparaît sur le tapis. Il est alors possible de disposer à nouveau des objets et ainsi continuer l'opération. En sens inverse, pour décharger la soute, des objets éloignés de la paroi mobile sont retirés pour libérer de l'espace sur le brin supérieur. Le tapis est alors enroulé sur le rouleau correspondant tandis que la paroi mobile est déplacée permettant ainsi par étapes de vider la soute de l'aéronef. Si la paroi mobile se déplace depuis une porte permettant le chargement d'objets jusqu'au fond de la soute, il est inutile pour l'utilisateur d'aller au fond de la soute, il lui suffit d'accéder à une zone du tapis proche de la porte de chargement. Ce dispositif permet donc de faciliter la tâche des opérateurs chargeant et déchargeant une soute d'aéronef. Il présente aussi l'avantage de pouvoir utiliser un tapis de longueur limitée.

Dans un tel dispositif, pour déplacer les objets, le rouleau sur lequel le tapis est destiné à venir s'enrouler est avantageusement monté sur la paroi mobile, ou tout du moins est proche de celle-ci et se déplace avec elle. Ainsi, le dispositif présente l'avantage que le tapis ne s'étend que d'un côté de la paroi mobile, ou tout du moins l'encombrement "derrière" la paroi mobile est limité.

Dans une première forme de réalisation d'un dispositif pour déplacer des objets selon l'invention, la paroi mobile porte des roues dentées et est guidée sur des crémaillères correspondantes fixées dans la soute. Les roues dentées permettent un déplacement sans glissement et autorisent un déplacement fiable de la paroi mobile. Chaque roue dentée peut être entraînée par un moteur. De la sorte, la motorisation pour le déplacement de la paroi mobile peut être intégrée dans ladite paroi qui est alors autonome. Seule une alimentation électrique de la paroi mobile est alors nécessaire.

Le seuil d'un dispositif pour le déplacement d'objets selon l'invention comporte par exemple un rouleau s'étendant transversalement par rapport au tapis et d'axe fixe par rapport à la soute. Ce rouleau fait alors office de poulie inverseuse : il permet au tapis de prendre un virage à 180° pour se rediriger vers la paroi mobile.

Pour s'adapter au mieux à la forme du plancher d'une soute d'un aéronef, un dispositif selon l'invention peut avantageusement comporter plusieurs tapis, et chaque tapis s'étend parallèlement à une partie sensiblement plane de la soute entre la paroi mobile et le seuil correspondant audit tapis. Le plus souvent en effet, une soute présente un fond plat sensiblement horizontal disposé entre deux rebords inclinés de manière à s'adapter au mieux à la forme sensiblement circulaire du fuselage de l'aéronef. En adaptant la position des tapis par rapport au fond de la soute, il est ainsi possible de recouvrir parfaitement le fond de la soute et ainsi de déplacer efficacement des objets dans celle-ci. De préférence, la paroi mobile porte alors pour chaque tapis un rouleau sur lequel le tapis correspondant est destiné à venir s'enrouler.

La présente invention concerne également un aéronef comportant une soute, caractérisé en ce que la soute est équipée d'un dispositif pour déplacer des objets tel que décrit plus haut. Dans un tel aéronef, la soute est de préférence équipée également d'un système de chargement de fret comportant des rouleaux ou similaires destinés à recevoir un conteneur, et les rouleaux de ce système de chargement de fret sont mobiles entre une position active où ils dépassent du plancher de la soute et une position rétractée dans laquelle ils se trouvent sous le niveau du plancher de la soute. De cette manière, la soute peut recevoir aussi bien des conteneurs que des objets divers tels des bagages. Les conteneurs peuvent être chargés à l'aide du système de chargement de fret (connu aussi sous les abréviations anglais "CLS" pour Cargo Loading System) tandis que les autres objets sont chargés à l'aide d'un dispositif selon la présente invention.

Pour optimiser le chargement de la soute avec des conteneurs et d'autres objets tels des bagages, la soute comporte de préférence au moins deux portes d'accès : une première porte est de taille suffisante pour permettre l'introduction d'un conteneur de taille normalisée dans la soute ; une seconde porte, de taille réduite par rapport à la première porte, est placée sur la paroi de la soute opposée à la paroi sur laquelle se trouve la première porte et est décalée par rapport à la première porte de telle sorte que les ouvertures correspondant auxdites portes ne se chevauchent pas. Dans une forme de réalisation préférée, le seuil du dispositif pour déplacer les objets est disposé au niveau de la seconde porte du côté de la première porte. De cette manière l'espace devant la seconde porte est laissé libre pour les opérateurs manipulant les bagages lors du chargement de la soute.

Des détails et avantages de la présente invention ressortiront mieux de la description qui suit, faite en référence aux dessins schématiques annexés sur lesquels :
La figure 1 représente une première soute d'aéronef équipée d'un dispositif de déplacement d'objets selon la présente invention,
La figure 2 montre une variante de réalisation de la soute de la figure 1,
La figure 3 est une vue schématique de côté montrant le principe de fonctionnement d'un dispositif de déplacement d'objets selon la présente invention,
La figure 4 est une vue schématique de face d'une soute équipée d'un dispositif de déplacement d'objets selon la présente invention, la partie gauche de cette figure montrant partiellement le dispositif de déplacement d'objets selon la présente invention tandis que ce dernier n'est pas visible sur la partie droite de cette figure,
La figure 5 représente schématiquement les portes de la soute de la figure 2,
La figure 6 est une vue en perspective de l'avant d'une paroi mobile d'un dispositif selon l'invention,
La figure 7 est une vue correspondant à la figure 6 mais montrant l'arrière de la même paroi mobile,
La figure 8 est une vue de détail montrant comment un tapis d'un dispositif selon l'invention est relié à une paroi mobile, et
La figure 9 est une vue de détail à échelle agrandie montrant des moyens de guidage et d'entraînement d'une paroi mobile d'un dispositif selon l'invention.

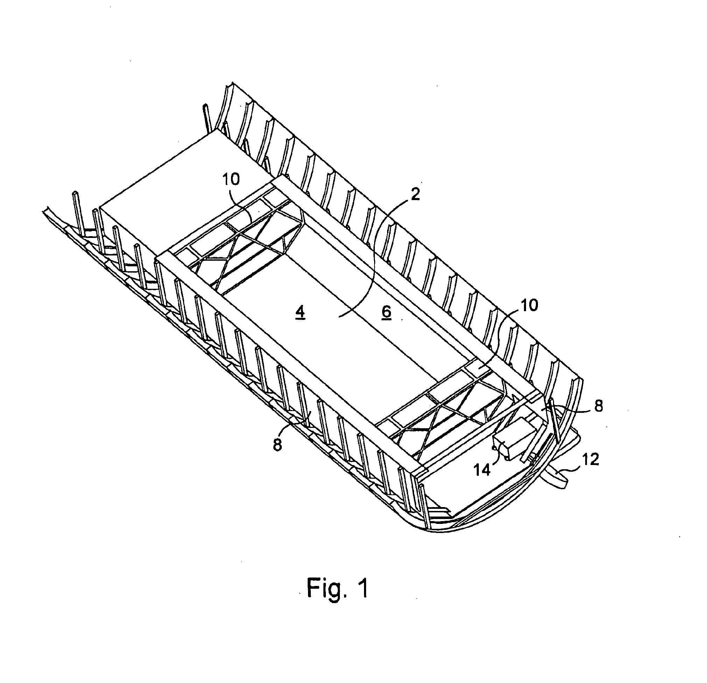

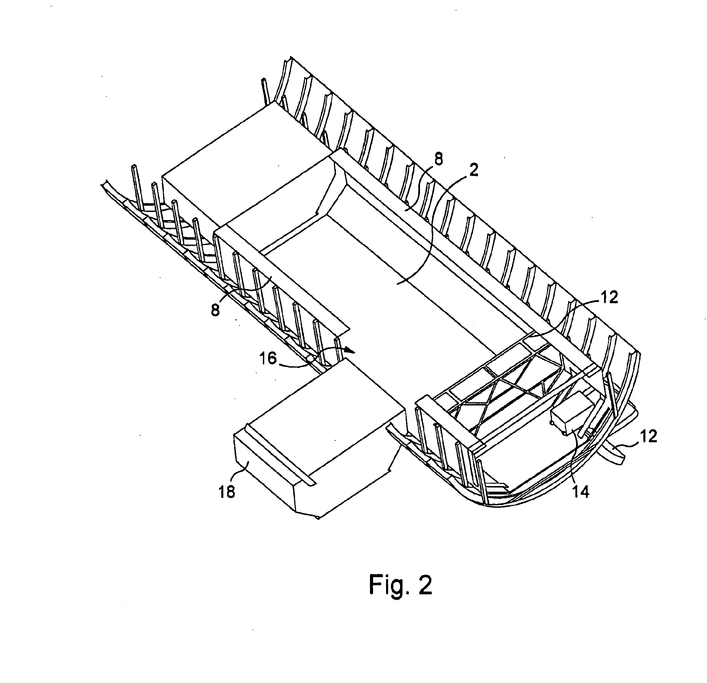

La description qui suit est faite en référence à un aéronef destiné notamment au transport de passagers. Les figures 1 et 2 représentent chacune une soute d'un tel aéronef.

On reconnaît sur les figures 1 et 2 un plancher 2 de soute. Ce plancher est réalisé en trois parties : une partie centrale 4 sensiblement horizontale et deux parties latérales 6 relevées, inclinées par rapport à la partie centrale 4. Bien entendu, les références d'horizontalité et de verticalité dans la présente demande de brevet concernent l'aéronef décrit lorsque celui-ci est au sol.

La soute présente également des parois latérales 8 sensiblement verticales qui délimitent le volume de chargement de la soute. Le plafond de celle-ci n'est pas visible ici.

Sur la figure 1, on a représenté une paroi mobile 10 d'un dispositif de déplacement de bagages selon l'invention dans deux positions distinctes. Il convient toutefois de remarquer qu'une soute n'est généralement équipée que d'une seule paroi mobile 10.

La soute de la figure 1 ne comporte comme accès qu'une seule porte à bagages 12. Pour le chargement et le déchargement de la soute, des bagages 14 passent par ladite porte.

La soute représentée sur la figure 2 comporte comme accès, outre une porte à bagages 12, une porte à conteneurs 16. Cette porte est de taille suffisante pour permettre par exemple le passage d'un conteneur 18 de type LD3.

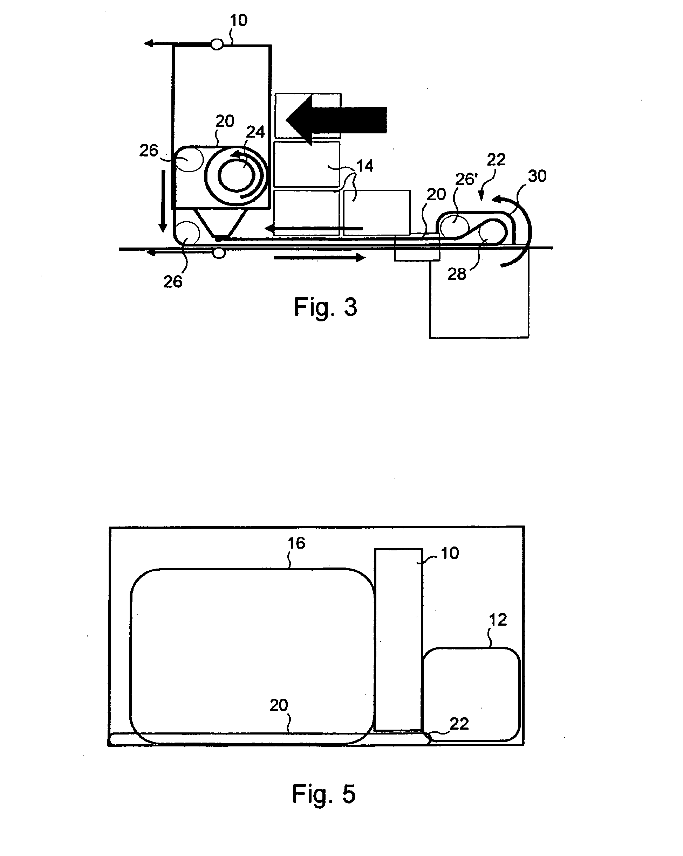

La figure 3 représente schématiquement un dispositif de déplacement d'objets selon l'invention afin de mieux comprendre son fonctionnement. Un tel dispositif comporte trois éléments principaux : la paroi mobile 10 déjà évoquée plus haut, un tapis 20 et un seuil 22.

La paroi mobile 10 porte un premier rouleau 24 sur lequel vient s'enrouler une extrémité du tapis 20. Des rouleaux de guidage 26 permettent d'assurer un bon dévidement et un bon guidage du tapis 20. Le tapis 20 est ici guidé pour passer sous la paroi mobile 10 parallèlement au plancher 2 de la soute. Il s'étend alors en direction du seuil 22. Ce dernier est monté transversalement par rapport à la soute sur le plancher 2 de celle-ci. Il présente essentiellement un rouleau inverseur 28, un rouleau de guidage 26' et un carénage 30. Le tapis 20 passe sous le rouleau inverseur 28 et repart en direction de la paroi mobile 10 formant ainsi un brin supérieur passant au-dessus du brin inférieur décrit précédemment. Le tapis 20 passe sous le rouleau de guidage 26' qui permet de maintenir le brin supérieur proche du brin inférieur. Le tapis 20, ou plus précisément l'une de ses extrémités, est ensuite fixé en partie basse de la paroi mobile 10.

Le fonctionnement est alors le suivant : lorsque la paroi mobile 10 s'éloigne du seuil 22, la paroi mobile 10 tire avec elle le brin supérieur du tapis 20. Le rouleau inverseur 28 agit comme une poulie et vient alors tirer le brin inférieur du tapis 20. Ce dernier est alors dévidé du premier rouleau 24. Lorsque des bagages 14 sont disposés contre la paroi mobile 10, on constate que ceux-ci sont entraînés avec ladite paroi. Ainsi, on peut charger des bagages 14 juste devant la paroi mobile 10, en les disposant sur le brin supérieur du tapis 20. En commandant le déplacement de la paroi mobile 10, les bagages 14 se trouvant sur le brin supérieur du tapis 20 se déplacent en suivant le mouvement de la paroi mobile 10.

Il apparaît clairement à l'homme du métier que lorsque la paroi mobile 10 se rapproche du seuil 22, le premier rouleau 24 doit tourner pour enrouler le tapis 20 et maintenir les deux brins du tapis 20 sensiblement tendus. Ainsi, en déplaçant la paroi mobile 10 depuis une position proche de la porte à bagages 12 jusque vers le fond de la soute, les bagages 14 placés devant cette paroi mobile 10 sont entraînés automatiquement vers le fond de la soute. Lors du déchargement de bagages, il suffit alors de commander le déplacement de la paroi vers la porte à bagages 12 pour rapprocher les bagages 14 se trouvant contre la paroi mobile 10 à proximité de la porte à bagages 12.

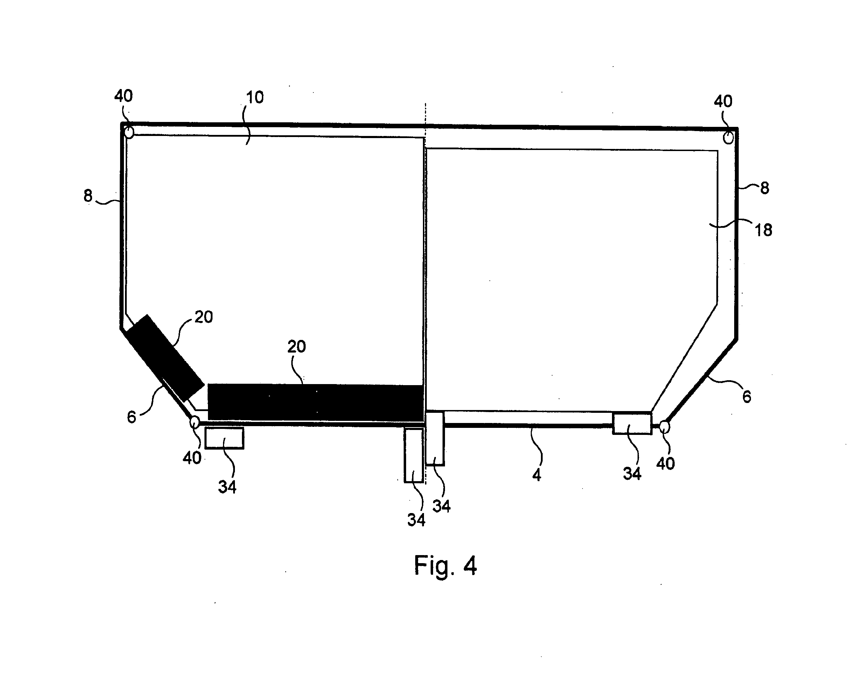

La soute représentée sur la figure 2 est destinée non seulement au transport de bagages 14 mais également de conteneurs 18. Ces derniers sont chargés et déchargés par la porte à conteneurs 16. Un système de chargement de fret, connu également sous le nom de CLS (abréviations anglaises pour Cargo Loading System) est alors prévu pour le déplacement des conteneurs 18 dans la soute. Un tel système comporte notamment des rouleaux 34 sur lesquels viennent glisser les conteneurs 18 se déplaçant dans la soute (figure 4). Un tel système est connu de l'homme du métier et n'est pas décrit plus en détails ici.

Le système de chargement de fret prévu dans la soute représentée sur les figures 2 et 4 présente toutefois la particularité que les rouleaux 34 du système peuvent se déplacer verticalement. Sur la partie gauche de la figure 4, les rouleaux 34 sont en position rétractée vers le bas de manière à permettre le passage de la paroi mobile 10. Sur la partie droite de la figure 4, les rouleaux 34 sont dans leur position active permettant ainsi de faciliter le déplacement de conteneurs 18 dans la soute.

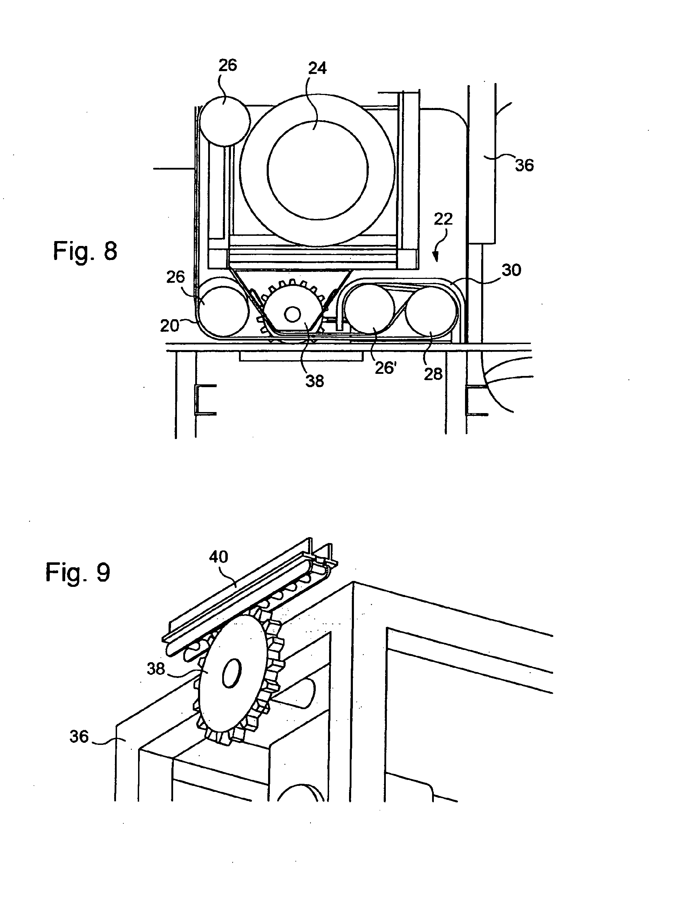

La figure 5 illustre le positionnement relatif de la porte à bagages 12 par rapport à la porte à conteneurs 16. Comme on peut le remarquer notamment sur la figure 2, ces deux portes sont disposées sur des parois opposées de la soute représentée. Ces portes sont également décalées par rapport à l'axe longitudinal de la soute. On remarque que les ouvertures correspondant à ces deux portes ne se chevauchent pas. On remarque même un espacement entre ces deux ouvertures de porte. Le seuil 22 est disposé à la limite de l'ouverture de la porte à bagages 12 du côté de la porte à conteneurs 16. Sur cette figure 5, la paroi mobile 10 est représentée dans une position avant le début d'un chargement. Elle se trouve à proximité immédiate du seuil 22 (comme sur la figure 8). Sur cette figure, la paroi mobile 10 se trouve sensiblement entre les deux portes, sans empiéter sur leurs ouvertures de manière à laisser libre le passage pour un conteneur 18 de type LD3 du côté de la porte à conteneurs 16 ainsi que la porte à bagages 12. L'espace devant la porte à bagages 12 est laissé libre pour ne pas gêner les opérateurs se trouvant à l'intérieur de la soute lors du chargement des bagages.

Un avantage du dispositif décrit ici est qu'il s'étend du seuil 22 à la paroi mobile 10 et sa taille s'adapte à la taille de l'espace consacré au rangement de bagages. On remarque également qu'aucun élément de ce dispositif, lorsqu'il se trouve par exemple dans la position représentée sur la figure 5, ne s'étend derrière la paroi mobile 10. Un tel élément viendrait forcément gêner l'introduction de conteneurs 18 par la porte à conteneurs 16. Ainsi, grâce à la construction proposée, des conteneurs 18 peuvent être librement introduits dans la soute sans être gênés par le dispositif pour le déplacement de bagages selon l'invention.

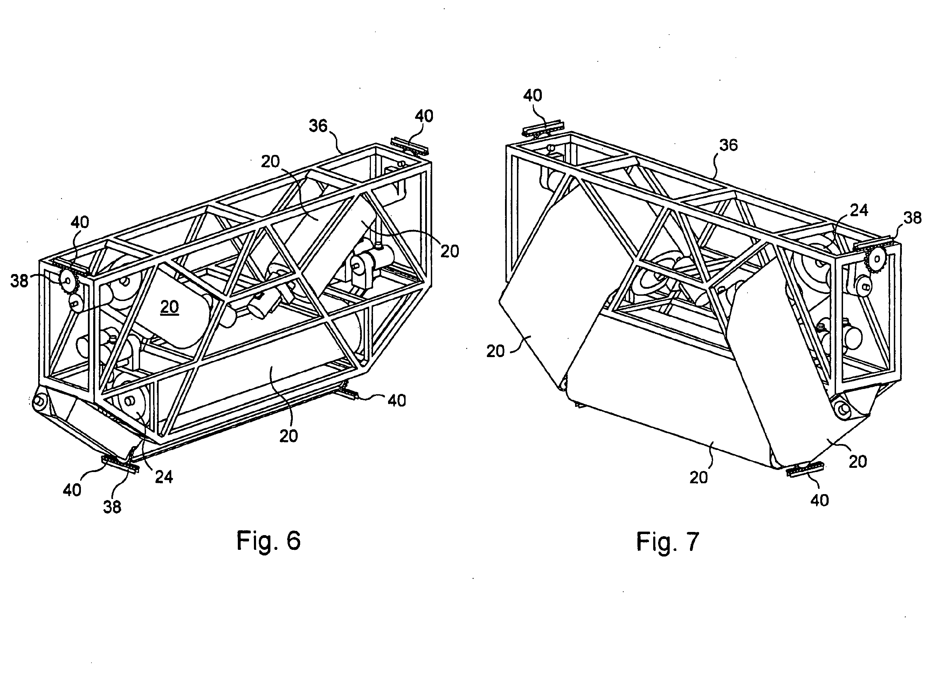

Les figures 6 et 7 montrent plus en détails la paroi mobile 10 montrée schématiquement sur les figures précédentes. On remarque tout d'abord que cette paroi mobile 10 est associée à trois tapis 20. Pour chacun de ces tapis 20, le fonctionnement est similaire à ce qui a été décrit plus haut. On prévoit ici un tapis 20 correspondant à la partie centrale 4 du plancher 2 de la soute et deux tapis 20 correspondant chacun à une partie latérale 6 du plancher 2 de la soute décrite.

La paroi mobile 10 comporte tout d'abord un châssis 36 sur lequel sont montés les premiers rouleaux 24, les rouleaux de guidage 26 ainsi que des moteurs d'entraînement.

On prévoit un moteur d'entraînement pour chacun des premiers rouleaux 24. De tels moteurs permettent de contrôler parfaitement l'enroulement et le déroulement des tapis 20. Ils permettent également de contrôler la tension dans les tapis 20.

On remarque également sur les figures 6 et 7 la présence de quatre roues dentées 38. Chacune de ces roues est elle aussi reliée à un moteur. Tous les moteurs sont pilotés de manière synchronisée. Les roues dentées 38 sont destinées à permettre le déplacement de la paroi mobile 10. Elles coopèrent avec des crémaillères 40 fixées longitudinalement dans la soute de l'aéronef. En faisant tourner les roues dentées 38 dans un sens ou dans l'autre, la paroi mobile avance ou recule dans la soute. La figure 9 représente un détail des moyens d'entraînement sur lesquels on reconnaît une roue dentée 38 et une portion de crémaillère 40.

La figure 8 montre quant à elle de manière un peu plus détaillée une vue semblable à la vue de la figure 3. Dans la position représentée sur la figure 8, la paroi mobile 10 est dans sa position la plus rapprochée du seuil 22. On remarque que pour limiter l'encombrement du dispositif de déplacement de bagages selon la présente invention, la paroi mobile 10 présente dans sa partie inférieure du côté du seuil 22 un logement permettant à la paroi mobile 10 de venir chevaucher partiellement le seuil 22.

Comme il ressort de la description qui précède, le dispositif de déplacement de bagages selon l'invention s'adapte aussi bien à une soute ne recevant que des bagages qu'à une soute destinée à recevoir à la fois des bagages et des conteneurs. Le dispositif selon l'invention peut s'adapter à de nombres configurations. Le nombre de conteneurs emportés dans la soute peut être variable. Le dispositif s'adapte alors parfaitement à l'espace disponible.

Le dispositif proposé évite au personnel chargé de placer les bagages de passagers dans la soute de l'aéronef de porter (ou lancer) les bagages vers le fond de la soute. Il suffit ici de déposer les bagages sur le tapis 20 du côté de la paroi mobile 10. Une fois le tapis 20 chargé, la paroi mobile 10 est déplacée libérant ainsi une nouvelle surface de tapis 20 à charger. Le déplacement de la paroi mobile 10 se réalise par exemple à l'aide d'un panneau de commande se trouvant à proximité de la porte à bagages 12 et/ou à l'aide d'une télécommande.

Le dispositif selon l'invention permet également de réaliser un gain de temps important pour le chargement et le déchargement des bagages.

Le dispositif décrit ci-dessus peut être réalisé dans une construction relativement légère avec un châssis tubulaire. De la sorte, la masse du dispositif ne pénalise pas trop lourdement la masse globale de l'aéronef. La longueur des tapis est également limitée.

Bien entendu, la présente invention ne se limite pas à la forme de réalisation préférée décrite ci-dessus à titre d'exemple non limitatif. Elle concerne également toutes les variantes de réalisation à la portée de l'homme du métier dans le cadre des revendications ci-après.

L'entraînement du dispositif pour déplacer des objets décrit ci-dessus est réalisé à l'aide de roues dentées engrenant avec des crémaillères. Cette forme de réalisation est une forme de réalisation préférée mais pourrait être remplacée par une variante. Un système de câbles et de poulies peut venir remplacer les crémaillères et les roues dentées. La paroi mobile peut par exemple être fixée sur un ou plusieurs câbles qui sont entraînés autour de poulies par un système d'entraînement approprié. D'autres variantes peuvent être envisagées pour la paroi mobile et ses moyens d'entraînement.

## Revendications

1. Dispositif pour déplacer des objets, notamment des bagages, dans une soute d'aéronef, comportant une paroi mobile (10) et au moins un tapis (20), une extrémité du tapis (20) étant raccordée à un rouleau (24) sur lequel le tapis (20) est destiné à venir s'enrouler **caractérisé en ce qu'**à partir du rouleau (24), le tapis (20) passe sous la paroi mobile (10) et s'étend en direction d'un seuil (22) formant ainsi un brin inférieur du tapis (20), et **en ce que** le tapis s'étend du seuil (22) jusqu'à la paroi mobile (10) à laquelle l'autre extrémité du tapis (20) est fixée formant ainsi un brin supérieur du tapis (20).

2. Dispositif pour déplacer des objets selon la revendication 1, **caractérisé en ce que** le rouleau (24) est monté de telle sorte qu'il se déplace avec la paroi mobile (10).

3. Dispositif pour déplacer des objets selon l'une des revendications 1 ou 2, **caractérisé en ce que** le rouleau (24) est monté sur la paroi mobile (10).

4. Dispositif pour déplacer des objets selon l'une des revendications 1 à 3, **caractérisé en ce que** la paroi mobile (10) porte des roues dentées (38) et est guidée sur des crémaillères (40) correspondantes fixées dans la soute.

5. Dispositif pour déplacer des objets selon l'une des revendications 1 à 4, **caractérisé en ce que** le seuil (22) comporte un rouleau (28) s'étendant transversalement par rapport au tapis (20) et d'axe fixe par rapport à la soute.

6. Dispositif pour déplacer des objets selon l'une des revendications 1 à 5, **caractérisé en ce qu'**il comporte plusieurs tapis (20), et **en ce que** chaque tapis (20) s'étend parallèlement à une partie sensiblement plane de la soute entre la paroi mobile (10) et le seuil (22) correspondant audit tapis (20).

7. Aéronef comportant une soute, **caractérisé en ce que** la soute est équipée d'un dispositif pour déplacer des objets selon l'une des revendications 1 à 6.

8. Aéronef selon la revendication 7, **caractérisé en ce que** la soute est équipée également d'un système de chargement de fret comportant des rouleaux (34) ou similaires destinés à recevoir un conteneur (18), et **en ce que** les rouleaux (34) de ce système de chargement de fret sont mobiles entre une position active où ils dépassent du plancher (2) de la soute et une position rétractée dans laquelle ils se trouvent sous le niveau du plancher (2) de la soute.

9. Aéronef selon l'une des revendications 7 ou 8, **caractérisé en ce que** la soute comporte au moins deux portes d'accès (12, 16), **en ce qu'**une première porte (16) est de taille suffisante pour permettre l'introduction d'un conteneur (18) de taille normalisée dans la soute, **en ce qu'**une seconde porte (12), de taille réduite par rapport à la première porte (16), est placée sur la paroi de la soute opposée à la paroi sur laquelle se trouve la première porte (16) et est décalée par rapport à la première porte (16) de telle sorte que les ouvertures correspondant auxdites portes ne se chevauchent pas,

10. Aéronef selon la revendication 9, **caractérisé en ce que** le seuil (22) du dispositif pour déplacer les objets est disposé au niveau de la seconde porte (12) du côté de la première porte (16).

## Claims

1. Device for moving objects, in particular luggage, in an aircraft hold, comprising a movable wall (10) and at least one belt (20), one end of the belt (20) being attached to a roller (24) on which the belt (20) is adapted to wind, **characterized in that** starting from the roller (24), the belt passes under the movable wall (10) and extends towards a threshold (22) so forming a lower strand of the belt (20), and **in that** the belt extends from the threshold (22) to the moveable wall (10) to which the other end of the belt is fastened so forming an upper strand of the belt.

2. Device for moving objects according to claim 1, **characterized in that** the roller (24) is mounted in such a way that it moves with the movable wall (10).

3. Device for moving objects according to one of claims 1 or 2, **characterized in that** the roller (24) is mounted on the movable wall (10).

4. Device for moving objects according to one of claims 1 to 3, **characterized in that** the movable wall (10) bears pinions (38) and is guided on corresponding racks (40) fastened in the hold.

5. Device for moving objects according to one of claims 1 to 4, **characterized in that** the threshold (22) comprises a roller (28) extending crosswise in relation to the belt (20) and with an axis that is fixed in relation to the hold.

6. Device for moving objects according to one of claims 1 to 5, **characterized in that** it comprises several belts (20), and **in that** each belt (20) extends parallel to a substantially flat portion of the hold between the movable wall (10) and the threshold (22) corresponding to said belt (20).

7. Aircraft comprising a hold, **characterized in that** the hold is equipped with a device for moving objects according to one of claims 1 to 6.

8. Aircraft according to claim 7, **characterized in that** the hold is also equipped with a cargo loading system comprising rollers (34) or the like intended to receive a container (18), and **in that** the rollers (34) of this cargo loading system can be moved between an active position in which they are proud of the floor (2) of the hold and a retracted position in which they are located beneath the floor (2) of the hold.

9. Aircraft according to one of claims 7 or 8, **characterized in that** the hold comprises at least two access doors (12, 16), **in that** a first door (16) is of sufficient size to allow introduction of a container (18) of standardized size into the hold, **in that** a second door (12), of smaller size in relation to the first door (16), is positioned on the opposite wall of the hold to the wall on which the first door (16) is located and is offset in relation to the first door (16) in such a way that the openings corresponding to the said doors do not overlap.

10. Aircraft according to claim 9, **characterized in that** threshold (22) of the device for moving objects is arranged at the second door (12) on the same side thereof as the first door (16).

## Patentansprüche

1. Vorrichtung zum Bewegen von Gegenständen, insbesondere Gepäckstücken, in einem Flugzeug-Laderaum, umfassend eine bewegliche Wand (10) und mindestens ein Förderband (20), wobei ein Ende des Förderbands (20) mit einer Rolle (24) verbunden ist, auf der sich das Förderband aufrollen soll, **dadurch gekennzeichnet, dass** das Förderband (20) von der Rolle (24) an unter der beweglichen Wand (10) verläuft und sich in Richtung auf eine Schwelle (22) erstreckt, indem es ein Untertrum des Förderbands (20) bildet, und dass das Förderband sich von der Schwelle (22) bis zur beweglichen Wand (10) erstreckt, an der das andere Ende des Förderbands (20) befestigt ist, indem es ein Obertrum des Förderbands (20) bildet.

2. Vorrichtung zum Bewegen von Gegenständen nach Anspruch 1, **dadurch gekennzeichnet, dass** die Rolle (24) so montiert ist, dass sie sich mit der beweglichen Wand (10) verlagert.

3. Vorrichtung zum Bewegen von Gegenständen nach einem der Ansprüche 1 oder 2, **dadurch gekennzeichnet, dass** die Rolle (24) an der beweglichen Wand (10) montiert ist.

4. Vorrichtung zum Bewegen von Gegenständen nach einem der Ansprüche 1 bis 3, **dadurch gekennzeichnet, dass** die bewegliche Wand (10) Zahnräder (38) trägt und auf entsprechenden, in dem Laderaum befestigten Zahnstangen (40) geführt ist.

5. Vorrichtung zum Bewegen von Gegenständen nach einem der Ansprüche 1 bis 4, **dadurch gekennzeichnet, dass** die Schwelle (22) eine Rolle (28) umfasst, die sich quer zum Förderband (20) erstreckt und eine bezüglich des Laderaums feststehende Achse besitzt.

6. Vorrichtung zum Bewegen von Gegenständen nach einem der Ansprüche 1 bis 5, **dadurch gekennzeichnet, dass** sie mehrere Förderbänder (20) umfasst und dass jedes Förderband (20) sich parallel zu einem im Wesentlichen ebenen Teil des Laderaums zwischen der beweglichen Wand (10) und der dem Förderband (20) entsprechenden Schwelle (22) erstreckt.

7. Flugzeug, umfassend einen Laderaum, **dadurch gekennzeichnet, dass** der Laderaum mit einer Vorrichtung zum Bewegen von Gegenständen nach einem der Ansprüche 1 bis 6 ausgerüstet ist.

8. Flugzeug nach Anspruch 7, **dadurch gekennzeichnet, dass** der Laderaum ferner mit einem Frachtladesystem ausgerüstet ist, das Rollen (34) oder ähnliches umfasst, die dazu bestimmt sind, einen Container (18) aufzunehmen, und dass die Rollen (34) dieses Frachtladesystems zwischen einer aktiven Stellung, in der sie am Boden (2) des Laderaums vorstehen, und einer eingefahrenen Stellung beweglich sind, in der sie sich unter dem Niveau des Bodens (2) des Laderaums befinden.

9. Flugzeug nach einem der Ansprüche 7 oder 8, **dadurch gekennzeichnet, dass** der Laderaum mindestens zwei Zugangstüren (12, 16) umfasst, dass eine erste Tür (16) von ausreichender Größe ist, um die Einführung eines Containers (18) von Standardgröße in den Laderaum zu gestatten, dass eine zweite Tür (12) von bezüglich der ersten Tür (16) kleinerer Größe in der Wand des Laderaums angeordnet ist, die der Wand entgegengesetzt ist, in der sich die erste Tür (16) befindet, und bezüglich der ersten Tür (16) so versetzt ist, dass die den Türen entsprechenden Öffnungen sich nicht überschneiden.

10. Flugzeug nach Anspruch 9, **dadurch gekennzeichnet, dass** die Schwelle (22) der Vorrichtung zum Bewegen von Gegenständen auf Höhe der zweiten Tür (12) auf der Seite der ersten Tür (16) angeordnet ist.
